# EUROPEAN PATENT APPLICATION

(11) **EP 2 533 188 A1**
(43) Date of publication of application: **12.12.2012**
(21) Application number: 11736748.2
(22) Date of filing: 19.01.2011
(51) Int. Cl.: G06Q 50/00, G06Q 10/00

(54) **PORTABLE TERMINAL, ACTION HISTORY DEPICTION METHOD, AND ACTION HISTORY DEPICTION SYSTEM**

(30) Priority: 01.02.2010 JP 2010020655
(71) Applicant: NEC Corporation, Tokyo 108-8001 (JP)
(72) Inventor: TAKAHASHI, Ryo, Tokyo 108-8001 (JP)
(74) Representative: Vossius & Partner
(86) International application number: PCT/JP2011/000236
(87) International publication number: WO 2011/093031

(57) **Abstract**

A terminal information acquisition unit 11 acquires information including position information of a portable terminal 10, direction information in which the portable terminal 10 faces, and terminal posture information of the portable terminal 10. A camera unit 12 generates a camera image obtained by taking an image of surrounding. A depiction history calculation unit 14 calculates activity history depiction information to be displayed based on an activity history acquired in advance and an image-taking range of the camera unit 12. An image combining unit 15 generates a composite image in which the activity history depiction information is depicted on the camera image. A display unit 16 display the composite image generated by the image combining unit 15.

## Description

### Technical Field

The present invention relates to a portable terminal, an activity history depiction method, and an activity history depiction system.

### Background Art

In recent years, various techniques using a GPS (Global Positioning System) function of a portable terminal has been developed. For example, an activity history is displayed on a two-dimensional (2D) map displayed on a display device by using position information acquired by using a GPS.

Patent literature 1 discloses an image processing apparatus for searching for information in a virtual space, capable of confirming the understanding of a past history with ease by clearly specifying a part that was displayed in the viewing field in the past. This image processing apparatus determines whether or not a polygon that is visually recognized in the viewing field of the apparatus is identical to a polygon that was displayed in the past, and when the polygon is determined to be already viewed, enables the display state of the polygon to be changed.

Patent literature 2 discloses a technique relating to a navigation system used in an information device terminal with a camera, in which a real image taken by the camera is combined with a CG (Computer Graphics) image.

### Citation List

### Patent Literature

Patent literature 1: Japanese Unexamined Patent Application Publication No. 11-195138
Patent literature 2: Japanese Unexamined Patent Application Publication No. 2006-105640

### Summary of Invention

### Technical Problem

However, Patent literatures 1 and 2 do not mention any technique for getting hold of an activity history of a user. Meanwhile, typical activity history depiction systems using an information terminal merely trace an activity history of a user on a planar map. Therefore, there is a problem in the related-art systems that it is very difficult to get hold of an activity history with a sense of presence.

The present invention has been made to solve the problem like this, and an object thereof is to provide a portable terminal, an activity history depiction method, and an activity history depiction system, capable of depicting an activity history with a sense of presence.

### Solution to Problem

An aspect of a portable terminal according to the present invention is a portable terminal including: terminal information acquisition means to acquire information including position information of the terminal itself, direction information to which the terminal faces, and terminal posture information of the terminal; camera means to generate a camera image obtained by taking an image of surrounding; depiction history calculation means to calculate activity history depiction information to be displayed based on an activity history acquired in advance and an image-taking range of the camera means; image combining means to generate a composite image in which the activity history depiction information is depicted on the camera image; and display means to display the composite image.

An aspect of an activity history depiction method according to the present invention is an activity history depiction method including: acquiring information including position information of a terminal itself, direction information to which the terminal faces, and terminal posture information of the terminal; generating a camera image obtained by taking an image of surrounding; calculating activity history depiction information to be displayed based on an activity history acquired in advance and an image-taking range of the camera image; generating a composite image in which the activity history depiction information is depicted on the camera image; and displaying the composite image.

An aspect of an activity history depiction system according to the present invention is an activity history depiction system including: the portable terminal including: activity history transmission means to generate the activity history information from information acquired by the terminal information acquisition means and to transmit the generated activity history information to an activity history server; and activity history acquisition means to acquire the activity history information of an arbitrary user from the activity history server; and an activity history server that stores the activity history information.

### Advantageous Effects of Invention

According to the present invention, it is possible to provide a portable terminal, an activity history depiction method, and an activity history depiction system, capable of describing an activity history with a sense of presence.

### Brief Description of Drawings

Fig. 1 is a system configuration diagram of an activity history depiction system according to a first exemplary embodiment;
Fig. 2 is an activity history table according to a first exemplary embodiment;
Fig. 3 is a diagram for a technique to calculate the size of an avatar according to a first exemplary embodiment;
Fig. 4 is a flowchart showing processes performed by an activity history depiction system according to a first exemplary embodiment;
Fig. 5 shows an operation concept of a portable terminal according to a first exemplary embodiment; and
Fig. 6 is a system configuration diagram of an activity history depiction system according to a first exemplary embodiment.

### Description of Embodiments

### <First exemplary embodiment>

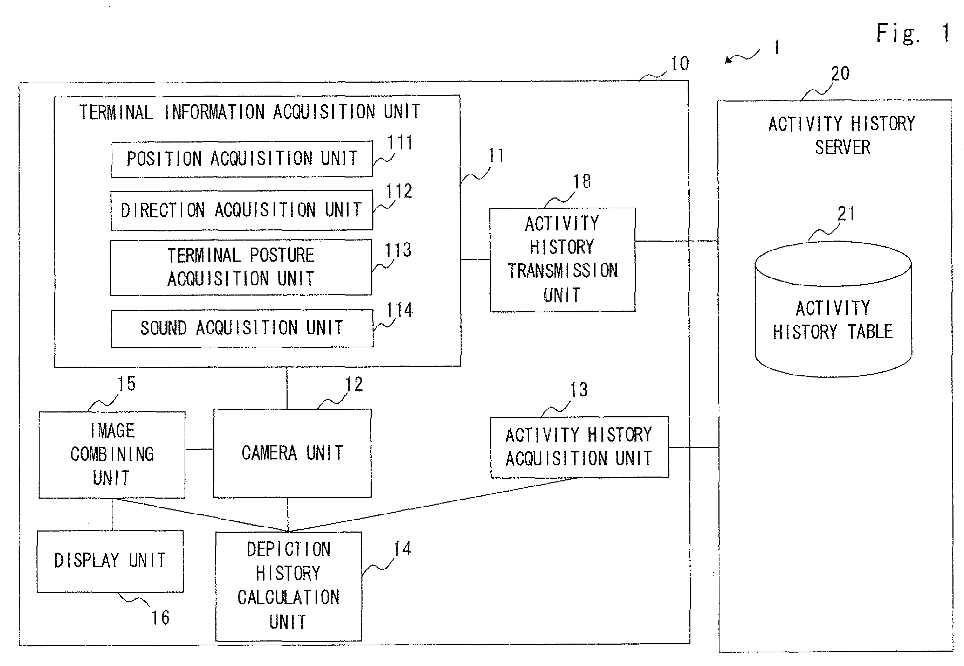

Exemplary embodiments according to the present invention are explained hereinafter with reference to the drawings. Firstly, a configuration of an activity history depiction system 1 according to a first exemplary embodiment of the present invention is explained with reference to a system configuration diagram shown in Fig. 1. This activity history depiction system 1 includes a portable terminal 10 and an activity history server 20. Examples of the portable terminal 10 include a mobile phone, a PDA (Personal Data Assistant), and a smart phone.

A terminal information acquisition unit 11 is a processing unit for acquiring information about the portable terminal 10. The terminal information acquisition unit 11 includes a position acquisition unit 111, a direction acquisition unit 112, a terminal posture acquisition unit z, and a sound acquisition unit 114.

The position acquisition unit 111 is a processing unit that acquires a current position at which the portable terminal 10 is located. For example, the position acquisition unit 111 is a processing unit equipped with a GPS (Global Positioning System). The direction acquisition unit 112 is a processing unit for acquiring a direction to which the portable terminal 10 faces. For example, when a camera image is generated by a camera unit 12 (which is explained later), the direction acquisition unit 112 calculates the terminal direction during the image generating process by using a terrestrial magnetism sensor provided in the portable terminal 10. The terminal posture acquisition unit 113 detects the terminal posture of the portable terminal 10. For example, when a camera image is generated by the camera unit 12 (which is explained later), the terminal posture acquisition unit 113 calculates the terminal posture of the portable terminal 10 during the image generating process by using an acceleration sensor provided in the portable terminal 10. The sound acquisition unit 114 is a processing unit that acquires a sound in the vicinity of the portable terminal 10.

The camera unit 12 is a processing unit that generates a camera image that is obtained by taking an image of an arbitrary three-dimensional (3D) space. Specifically, the camera unit 12 is a processing unit that is attached to the portable terminal 10 and includes a camera function of generating a moving image and a still image. A user points the camera attached to the portable terminal 10 toward a target area with which the user intends to display the activity history. The camera unit 12 successively acquires camera images that are obtained by taking images of scenes in the direction to which the portable terminal 10 is pointed, according to a startup operation of a camera application performed by the user. The camera unit 12 supplies the acquired image to an image combining unit 15.

An activity history acquisition unit 13 is a processing unit for acquiring an activity history from the activity history server 20. The activity history acquisition unit 13 accesses the activity history server 20 and acquires a desired activity history according to user's choice. For example, a user selects a desired activity history by selecting an activity history that the user intends to acquire from those displayed on a display window of an application. The activity history acquisition unit 13 outputs the acquired activity history to a depiction history calculation unit 14.

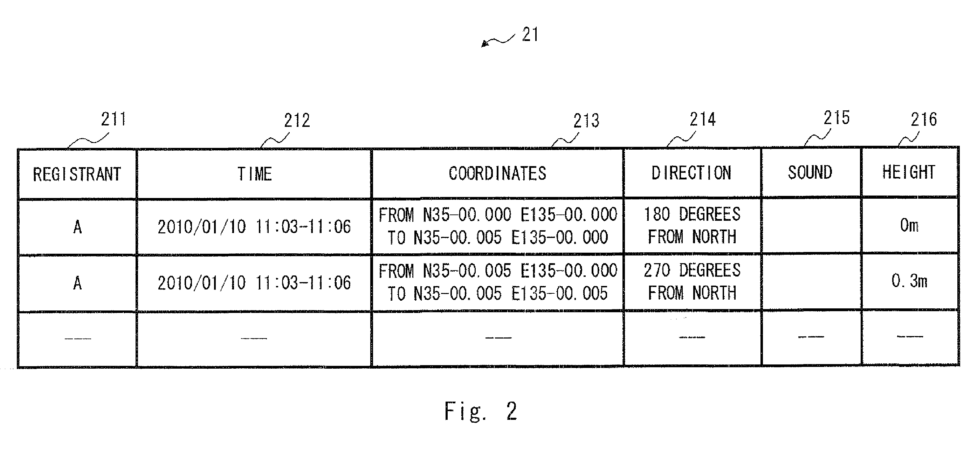

The activity history server 20 is a server that an arbitrary user can access, and has an activity history table 21 for holding an activity history of each user. Fig. 2 shows details of the activity history table 21. The activity history table 21 includes, as columns, "registrant" 211, "time" 212, "coordinates" 213, "direction" 214, "sound" 215, and "height" 216.

As the registrant 211, name information of a user who has registered his/her activity history is entered. As the time 212, time information at which the registered user registered the activity history is entered. As the coordinates 213, position information at which the user was present when he/she enters the activity history is entered. For example, position information acquired by a GPS is entered as the coordinates 213. As the direction 214, the direction of the terminal of the registrant who enters the activity history is entered. The information entered as the direction 214 is specified, for example, as "36 degrees from north". As the information entered as the sound 215, sound information acquired by the sound acquisition unit 114 is entered. The height 216 is altitude information of the registrant. When the portable terminal 10 is equipped with an altimeter, the altitude information can be acquired by the altimeter. Alternatively, the height information may be acquired based on information of RFID (Radio Frequency IDentification) attached to the ground, a wall, or other objects.

Note that although it is not illustrated in the figure, the activity history server 20 may hold information about each user who registers his/her activity history. For example, the activity history server 20 holds the height, the gender, and the like of each user. This information may be used to customize the display of an avatar (which is explained later). For example, when an activity history of a female user is displayed, the avatar may be displayed with female-type clothes.

An example of activity history information shown in Fig. 2 is explained. For example, it is registered that a registrant "person A" pointed the terminal toward south (180 degrees from north) during a period from 11:03 in 2010 to 11:06, and was moving to the south. Further, a sound that was recorded by the sound acquisition unit 114 of the portable terminal 10 of the person A during that period (11:03 in 2010 to 11:06) is stored. Further, it is also registered that the person A was at an altitude of 0m.

The depiction history calculation unit 14 calculates the size of the activity history depiction information (i.e., avatar in this example) to be displayed on a display unit 16, the display position of the avatar, and the display direction of the avatar based on the image-taking range of the camera unit and the activity history downloaded from the activity history server 20. The depiction history calculation unit 14 calculates the image-taking range (e.g., latitude 35.00 degrees, longitude 135.00 degrees to latitude 35.01 degrees, longitude 135.01 degrees, and altitude 0m to 10 m) by taking account of the image-taking performance property, the degree of the zoom, and the like of the camera unit 12. Then, the depiction history calculation unit 14 determines whether or not the position information of the activity history is located within the image-taking range. When the position information is not within the image-taking range, the depiction history calculation unit 14 notifies the image combining unit 15 that the avatar is outside the display range.

On the other hand, when the position information of the activity history is within the image-taking range of the camera unit 12, the depiction history calculation unit 14 calculates the display coordinates of the avatar on the image to be displayed on the display unit 16. Further, the depiction history calculation unit 14 calculates the size of the avatar positioned at the coordinates. For example, the depiction history calculation unit 14 can calculate the size of the avatar based on the position at which the camera of the portable terminal 10 is operated, the position of the coordinates, and the height information of the user, who is displayed as the avatar, by using a typical pin-hole principle. In this way, when the point at which the camera is operated is close to the position information indicated by the activity history, the size of the displayed avatar is large. On the other hand, when the point at which the camera is operated is far away from the position information indicated by the activity history, the size of the displayed avatar is small. The depiction history calculation unit 14 calculates the motion of the avatar by successively calculating the positions and the sizes of the avatar.

Note that the size of the avatar may be determined based on the distance from the image-taking point without taking account of the height of the user and the like.

Further, the depiction history calculation unit 14 also calculates the direction of the avatar to be displayed. The direction of the avatar is calculated based on the direction 214 included in the activity history and the direction of the portable terminal 10 at the time when the camera of the portable terminal 10 is operated. More specifically, the depiction history calculation unit 14 calculates the difference between the direction 214 included in the activity history (e.g., "45 degrees from north") and the direction of the portable terminal 10 (e.g., "90 degrees from north"), and calculates the direction of the avatar by using this difference.

The image combining unit 15 is a processing unit that combines the camera image supplied from the camera unit 12 with the avatar information supplied from the depiction history calculation unit 14 (coordinates at which the avatar is displayed, the size of the avatar, the direction of the avatar, and the like), and generates a composite image to be displayed in the display unit 16. When the avatar is outside the display range, the image combining unit 15 generates a composite image in which an indication that the avatar is outside the display range is shown on the camera image generated by the camera unit 12. For example, the image generation unit 16 generates a composite image in which a display indicating "the person A is walking outside the display range" is superimposed on the camera image generated by the camera unit 12. On the other hand, when the avatar is within the display range, the image combining unit 15 generates a composite image in which the avatar is superimposed on the camera image generated by the camera unit 12. The image combining unit 15 outputs the generated composite image to the display unit 16.

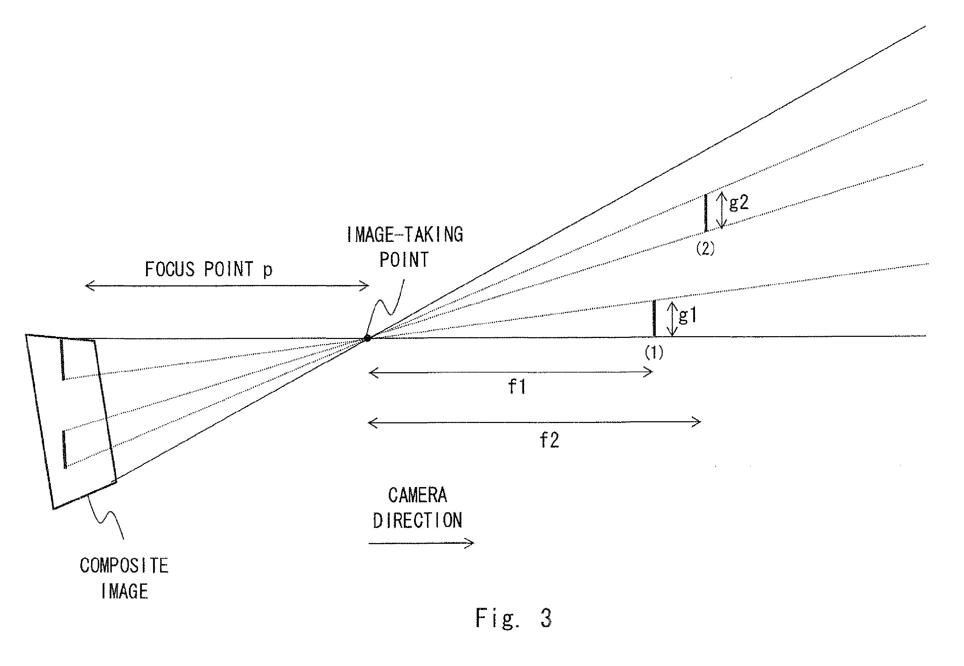

Fig. 3 is a diagram for explaining the display position of the avatar and the size of the avatar obtained by the depiction history calculation unit 14, and a concept for the generation of a composite image by the image combining unit 15. Note that for simplifying the explanation, the explanation is made with a 2D model. The depiction history calculation unit 14 calculates a focus distance p based on the degree of the zoom of the camera, the image-taking performance property of the camera, and the like during the image-taking process performed by the camera unit 12.

The depiction history calculation unit 14 calculates the place at which the activity history to be depicted is located based on the activity history information. In the example shown in Fig. 3, it is assumed that a user whose activity history is to be depicted is present at a point (1) that is away from the image-taking point by a distance f1. Further, it is also assumed that the user whose activity history is to be depicted has a height g1. In this case, the size of the avatar to be displayed in the composite image is calculated based on a formula "p×g1/f1".

Further, the depiction history calculation unit 14 also calculates the display position of the avatar in the composite image. The depiction history calculation unit 14 projects the user whose activity history is to be depicted onto the corresponding point in the composite image. The depiction history calculation unit 14 defines the coordinates in the composite image corresponding to this projected position as the display position.

When the user whose activity history is to be depicted is in a place higher than the ground as in the case of the point (2) shown in Fig. 3, for example, the depiction history calculation unit 14 calculates the display position of the avatar according to the height from the ground.

The display unit 16 is an information display unit such as a display screen provided in the portable terminal 10. In the display unit 16, in addition to an operation window of the portable terminal 10, the composite image generated by the image combining unit 15, i.e., the image that is obtained by disposing the avatar on the camera image generated by the camera unit 12 is also displayed.

An activity history transmission unit 17 is a processing unit that transmits the own activity history information to the activity history server 20. The activity history information is generated based on peripheral information acquired by the terminal information acquisition unit 11.

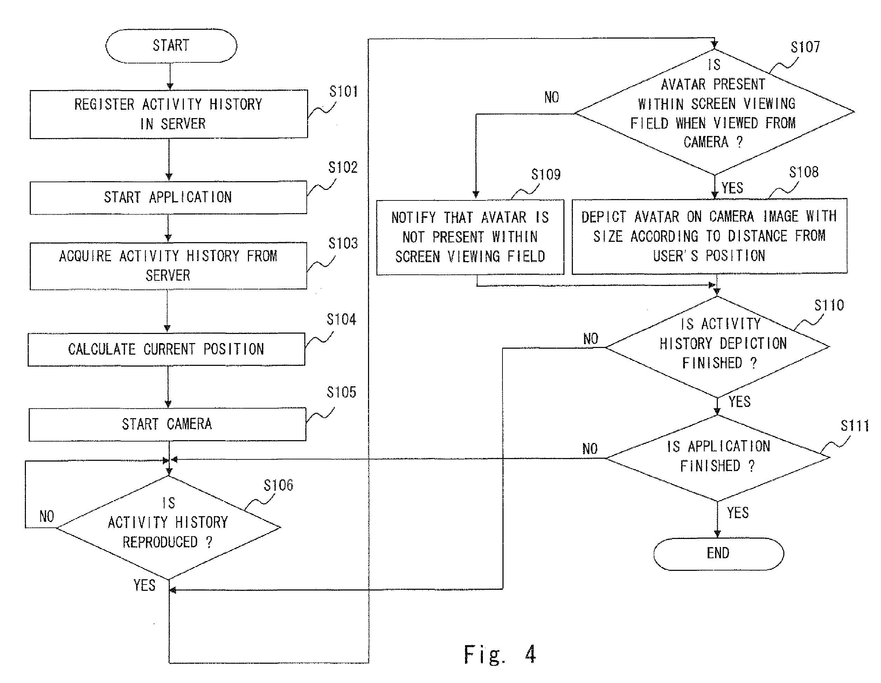

Next, a process for depicting an activity history in the portable terminal 10 is explained with reference to a system configuration diagram shown in Fig. 1 and a flowchart shown in Fig. 4. Firstly, a user having the portable terminal 10 starts instructing the portable terminal 10 to record an activity history. For example, this instruction is made by selecting an activity history storage start from a display menu displayed in the display unit 16. The activity history is generated by acquiring an information piece by each processing unit of the terminal information acquisition unit 11 and combining these acquired information pieces. The user instructs the portable terminal 10 to register the generated activity history into the activity history server 20. When this instruction is made, the activity history transmission unit 17 transmits the activity history to the activity history server 20 (S101).

The user starts up an application for displaying the activity history (S102). The user instructs to acquire an activity history of an intended user from the activity history server 20. For example, a list of activity histories is displayed, and the user instructs to acquire an activity history of an intended user by selecting the activity history that the user intends to display from the displayed list. When this instruction is made, the activity history acquisition unit 13 acquires the desired activity history information from the activity history server 20 (S103).

Note that although the above explanation is made under the assumption that the user can acquire the activity history of other users, the present invention is not limited to this configuration. That is, certain restrictions may be imposed on the acquisition of the activity history by using authentication using passwords or the like.

Next, the position acquisition unit 111 calculates the current position of the portable terminal 10 (S104), and a camera function is started up (S105). When the user instructs to reproduce the activity history (S106: Yes), the depiction of the activity history starts.

The depiction history calculation unit 14 calculates whether or not the area in which an image is to be taken (e.g., latitude 35.00 degrees, longitude 135.00 degrees to latitude 35.01 degrees, longitude 135.01 degrees, and altitude 0m to 10 m) is taken as an image by the camera based on the direction of the portable terminal 10, the terminal posture, the current position information acquired from a GPS, the image-taking performance property of the camera, and the like. The depiction history calculation unit 14 determines whether or not the depiction start point of the activity history acquired from the activity history server 20 is included in the area in which an image is to be taken (S107).

When the depiction start point is included (S107: Yes), the depiction history calculation unit 14 calculates the display coordinates on the display unit 16 (S108). Further, the depiction history calculation unit 14 also calculates the size of the avatar to be positioned at the coordinates and the direction of the avatar (S108). The image combining unit 15 generates a composite image in which the avatar information is superimposed on the camera image generated by the camera unit 12 and displays the generated composite image in the display unit 16 (S109).

When the avatar is not within the area in which an image is to be taken (S107: No), a composite image in which an indication to that effect (e.g., a message "the person A is walking outside the display range") is shown is displayed in the display unit 16 (S109).

By successively performing the above-described processes in the steps S107 to S109, the position, the size, and the direction of the avatar is successively calculated. As a result, images in which the avatar is moving are generated.

When the display of the activity history has finished (S110: Yes), a message that urges user's input regarding whether the execution of the activity history display application should be continued or not is displayed in the display unit 16. When the user selects the continuation of the execution of the application (S111: No), the above-described steps S106 to S110 are repeated. When the user selects the termination of the execution of the application (S111: Yes), the execution of the activity history depiction application is finished.

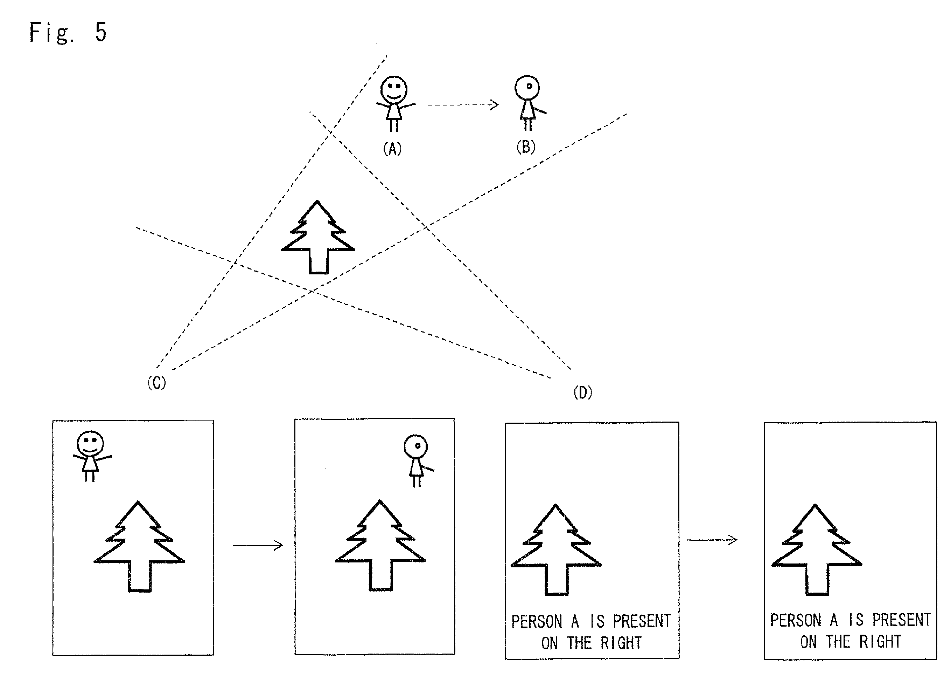

Next, an operation concept of the portable terminal 10 according to this exemplary embodiment is explained with reference to Fig. 5. In the example shown in Fig. 5, it is assumed that an activity history of a person X in a case where the person X moves from a point A to a point B is displayed.

Firstly, a process for displaying an activity history of the person X from a point C in the display unit 16 of the portable terminal 10 is explained. In the viewing angle of the camera of the portable terminal 10 from the point C, the point at which the person X is present is included in the depiction range. Therefore, an avatar corresponding to the person X is displayed in the composite image. Note that the avatar is disposed in such a manner that the avatar faces to the direction to which the person X faces at the time when the activity history recoding is started. Further, the avatar is displayed with the size that is calculated based on the distance between the point C and the point A and the height information of the person X.

After that, composite images are successively displayed in the display unit 16 until the avatar reaches a point D. In this process, the position, the size, and the direction of the avatar are continuously calculated and they are reflected in the composite images displayed in the display unit 16.

A process for displaying the activity history of the person X from the point D in the display unit 16 of the portable terminal 10 is explained. In the viewing angle of the camera of the portable terminal 10 from the point D, the point at which the person X is present is not included in the depiction range. Therefore, a message "the person A is present on the right" is displayed in the composite image.

Next, advantageous effects of the portable terminal and the activity history depiction system according to this exemplary embodiment are explained. As described above, the portable terminal according to this exemplary embodiment calculates the activity history depiction information to be depicted (avatar in this exemplary embodiment) for the target space image taken by image-taking means such as a camera, generates a composite image in which the avatar is disposed, and displays the composite image. Since the composite image is obtained by disposing the avatar on the camera image taken by the image-taking means such as a camera, it is possible to get hold of the activity history while feeling a sense of presence.

Further, since the depiction of the activity history changes according to the place where the portable terminal 10 is used and the terminal posture and the terminal direction of the portable terminal 10 at the time when the camera application is started up, it is possible to get hold of the activity history with an enhanced sense of presence.

For example, when a user has known that an activity history recording that his/her friend moved to a certain destination is stored, the user can display the activity history of that friend by the portable terminal 10 according to this exemplary embodiment. In this way, the user can get hold of the path while feeling a sense of presence.

Note that the present invention is not limited to the above-described exemplary embodiments, and various modifications can be made as appropriate without departing from the spirit of the present invention. For example, a map information server containing information such as places and heights of buildings is separately prepared. The portable terminal 10 acquires information from this map information server and determines whether or not an avatar is located in the shadow of a building. When the avatar is located in the shadow of a building, that avatar may not be displayed in the composite image. Further, an indication to the effect that the avatar is located in the shadow may be displayed.

Further, the portable terminal 10 may be equipped with a sensor that detects an obstacle and the like located in the vicinity of the portable terminal 10, such as a laser range sensor that detects an obstacle located in the vicinity of the portable terminal 10 and an ultrasound sensor. When an obstacle is detected in the vicinity of the portable terminal 10 by that sensor, an avatar that is located behind the obstacle may not be displayed.

Further, the image of an avatar to be displayed may be arbitrarily created by a user. Further, the activity history may be displayed by changing the display direction and the display size of an arbitrary mark (such as a triangle and a rectangle) instead of using the avatar.

Although examples in which a composite image is generated in a portable terminal are explained in the above explanation, the present invention is not limited to these examples. That is, the composite image may be generated by a server. That is, the portable terminal 10 notifies the server of the position, the terminal direction, and the terminal posture of the portable terminal 10 itself, and the server generates a composite image. The portable terminal 10 may display the composite image generated by the server.

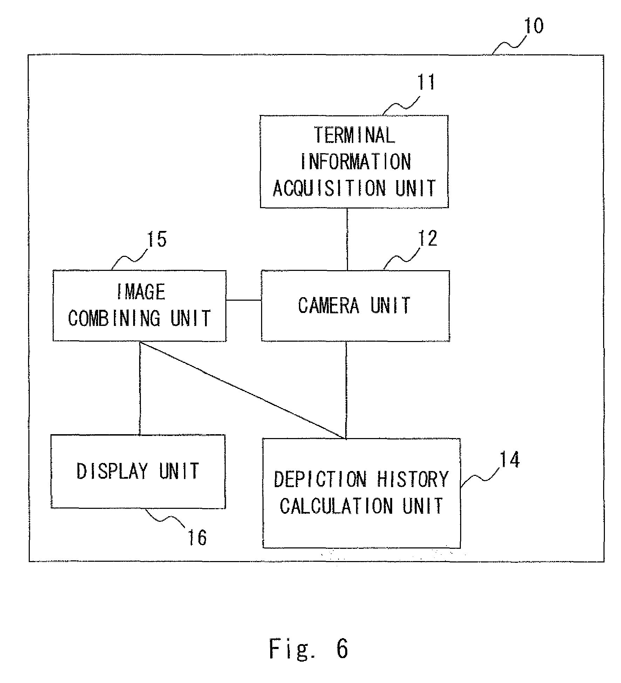

Note that Fig. 6 shows the minimum configuration of the portable terminal 10 according to the first exemplary embodiment. The portable terminal 10 includes a terminal information acquisition unit 11, a camera unit 12, a depiction history calculation unit 14, an image combining unit 15, and a display unit 16. The terminal information acquisition unit 11 acquires information including the position information of the portable terminal 10, the direction information to which the portable terminal 10 faces, and the terminal posture information of the portable terminal 10.

The camera unit 12 is a processing unit that generates a camera image obtained by taking an image of surrounding. The depiction history calculation unit 14 calculates activity history depiction information to be displayed based on an activity history acquired in advance and an image-taking range of the camera unit 12. The depiction history calculation unit 14 calculates activity history depiction information to be displayed based on an activity history acquired in advance and an image-taking range of the camera unit 12. The image combining unit 15 generates a composite image obtained by combining the activity history calculated by the depiction history calculation unit 14 with the camera image. The display unit 16 displays the image generated by the composite image generation unit 15.

With the above-described configuration, it is possible to generate a composite image in which the activity history is combined with the camera image. A user can refer to the activity history while feeling a sense of presence by referring to this composite image through the display unit 16.

### (Supplementary note 1)

An activity history depiction method including:
acquiring information including position information of a terminal itself, direction information to which the terminal faces, and terminal posture information of the terminal;
generating a camera image obtained by taking an image of surrounding;
calculating activity history depiction information to be displayed based on an activity history acquired in advance and an image-taking range of the camera image;
generating a composite image in which the activity history depiction information is depicted on the camera image; and
displaying the composite image.

### (Supplementary note 2)

The activity history depiction method described in Supplementary note 1, in which:
in the process of calculating activity history depiction information, a depiction size with which the activity history depiction information is depicted on the camera image is calculated based on an image-taking range in which an image is taken in an image-taking process of the camera image and position information included in the activity history, and
in the process of generating a composite image, the activity history depiction information, which is set to the depiction size, is depicted on the camera image.

### (Supplementary note 3)

The activity history depiction method described in Supplementary note 1 or 2, in which:
in the process of calculating activity history depiction information, a direction in which the activity history depiction information is depicted on the camera image is calculated based on an image-taking range in which an image is taken in an image-taking process of the camera image and direction information included in the activity history, and
in the process of generating a composite image, the activity history depiction information, which is disposed in the direction in which the activity history depiction information is depicted, is depicted on the camera image.

### (Supplementary note 4)

The activity history depiction method described in any one of Supplementary notes 1 to 3, in which the activity history depiction information is an avatar.

### (Supplementary note 5)

The activity history depiction method described in Supplementary note 1, in which:
the activity history information is generated from information acquired in the process of acquiring the terminal information and transmitted to an activity history server, and
the activity history information of an arbitrary user is acquired from the activity history server.

This application is based upon and claims the benefit of priority from Japanese patent application No. 2010-020655, filed on February 1, 2010, the disclosure of which is incorporated herein in its entirety by reference.

### Industrial Applicability

The present invention can be used for a portable terminal having an image-taking function such as a mobile phone and a PDA.

### Reference Signs List

- 1: ACTIVITY HISTORY DEPICTION SYSTEM
- 10: PORTABLE TERMINAL
- 11: TERMINAL INFORMATION ACQUISITION UNIT
- 111: POSITION ACQUISITION UNIT
- 112: DIRECTION ACQUISITION UNIT
- 113: TERMINAL POSTURE ACQUISITION UNIT
- 114: SOUND ACQUISITION UNIT
- 12: CAMERA UNIT
- 13: ACTIVITY HISTORY ACQUISITION UNIT
- 14: DEPICTION HISTORY CALCULATION UNIT
- 15: IMAGE COMBINING UNIT
- 16: DISPLAY UNIT
- 17: ACTIVITY HISTORY TRANSMISSION UNIT
- 20: ACTIVITY HISTORY SERVER
- 21: ACTIVITY HISTORY TABLE

## Claims

1. A portable terminal comprising:
terminal information acquisition means to acquire information including position information of the terminal itself, direction information to which the terminal faces, and terminal posture information of the terminal;
camera means to generate a camera image obtained by taking an image of surrounding;
depiction history calculation means to calculate activity history depiction information to be displayed based on an activity history acquired in advance and an image-taking range of the camera means;
image combining means to generate a composite image in which the activity history depiction information is depicted on the camera image; and
display means to display the composite image.

2. The portable terminal according to Claim 1, wherein:
the depiction history calculation means calculates a depiction size with which the activity history depiction information is depicted on the camera image based on an image-taking range of the camera means and position information included in the activity history, and
the image combining means depicts the activity history depiction information, which is set to the depiction size, on the camera image.

3. The portable terminal according to Claim 1 or 2, wherein:
the depiction history calculation means calculates a direction in which the activity history depiction information is depicted on the camera image based on an image-taking range of the camera means and direction information included in the activity history, and
the image combining means depicts the activity history depiction information, which is disposed in the direction in which the activity history depiction information is depicted, on the camera image.

4. The portable terminal according to any one of Claims 1 to 3, wherein the activity history depiction information is an avatar.

5. The portable terminal according to any one of Claims 1 to 4, further comprising:
activity history transmission means to generate the activity history information from information acquired by the terminal information acquisition means and to transmit the generated activity history information to an activity history server; and
activity history acquisition means to acquire the activity history information of an arbitrary user from the activity history server.

6. An activity history depiction system comprising a portable terminal according to Claim 5 and an activity history server according to Claim 5.

7. An activity history depiction method comprising:
acquiring information including position information of a terminal itself, direction information to which the terminal faces, and terminal posture information of the terminal;
generating a camera image obtained by taking an image of surrounding;
calculating activity history depiction information to be displayed based on an activity history acquired in advance and an image-taking range of the camera image;
generating a composite image in which the activity history depiction information is depicted on the camera image; and
displaying the composite image.

8. The activity history depiction method according to Claim 7, wherein:
in the process of calculating activity history depiction information, a depiction size with which the activity history depiction information is depicted on the camera image is calculated based on an image-taking range in which an image is taken in an image-taking process of the camera image and position information included in the activity history, and
in the process of generating a composite image, the activity history depiction information, which is set to the depiction size, is depicted on the camera image.

9. The activity history depiction method according to Claim 7 or 8, wherein:
in the process of calculating activity history depiction information, a direction in which the activity history depiction information is depicted on the camera image is calculated based on an image-taking range in which an image is taken in an image-taking process of the camera image and direction information included in the activity history, and
in the process of generating a composite image, the activity history depiction information, which is disposed in the direction in which the activity history depiction information is depicted, is depicted on the camera image.

10. The activity history depiction method according to any one of Claims 7 to 9, wherein the activity history depiction information is an avatar.
